# EUROPEAN PATENT SPECIFICATION

(11) **EP 1 318 960 B1**
(45) Date of publication and mention of the grant of the patent: **01.12.2004**
(21) Application number: 01982305.3
(22) Date of filing: 14.09.2001
(51) Int. Cl.: B65G 67/60, B63B 27/22, B65G 17/12, B65G 21/14

(54) **GROUP FOR COLLECTING LOOSE MATERIAL FROM THE HOLD OF A SHIP**
VORRICHTUNG ZUM ENTLADEN VON SCHÜTTGUT AUS SCHIFFSLADERÄUMEN
ENSEMBLE PERMETTANT DE RECUEILLIR DU MATERIAU EN VRAC A PARTIR DE LA CALE D'UN BATEAU

(30) Priority: 20.09.2000 IT MI002045
(43) Date of publication of application: 18.06.2003
(73) Proprietor: TECHINT COMPAGNIA TECNICA INTERNAZIONALE S.p.A., 20149 Milano (IT)
(72) Inventor: DE CAPITANI DI VIMERCATE, Ernesto, I-16131 Genova (IT)
(74) Representative: Martegani, Franco
(86) International application number: PCT/EP2001/010733
(87) International publication number: WO 2002/024559

(56) References cited:
- EP-A- 0 799 782
- DE-A- 2 210 311
- US-A- 4 286 909

## Description

The present invention relates to a group for collecting loose material from the hold of a ship. At present, more or less fluid-like loose materials, such as sand, minerals, grain, etc. are charged into the holds of ships to be transported. Once they have been deposited and have reached their destination, they must be collected and removed to be sent to the specific sites for use.

For this purpose, various lifting systems have been set up for collecting quantities of these materials and unloading them into local means of transport, either by land or water.

The known devices however have various problems in removing these materials and subsequently loading them onto the means of transport. This, in fact, generally requires a device capable of removing the stowed, compact material which must then be collected and unloaded into the appropriate tank, by means of another device.

Due to the necessity of adopting various groups or devices for effecting these operations, their co-ordination is not easy and requires the setting up and continuous control of their running.

Furthermore, the presence and necessity for several devices does not allow complete removal and the entire emptying of the hold in short times as the various connections must be respected, together with the due co-ordination and times required.

DE 2210311 A and US 4286909 A relate to a feeder for emptying holds of ships comprising an elevator and a scraper.

An objective of the present invention is therefore to obtain a group for collecting loose material from the hold of a ship which can provide an easy solution to the above problems, and at the same time maintaining an effective functionality.

A further objective of the present invention is to obtain a group for collecting loose or fluid-like material from the hold of a ship which allows the complete removal of all the material present.

These objectives according to the present invention are achieved by means of a group for collecting loose material from the hold of a ship as described in claim 1.

Other characteristics of the invention are illustrated in the subsequent claims.

The characteristics and advantages of a group for collecting loose material from the hold of a ship according to the present invention can be more clearly understood from the following illustrative but nonlimiting description, referring to the enclosed schematic drawings wherein:

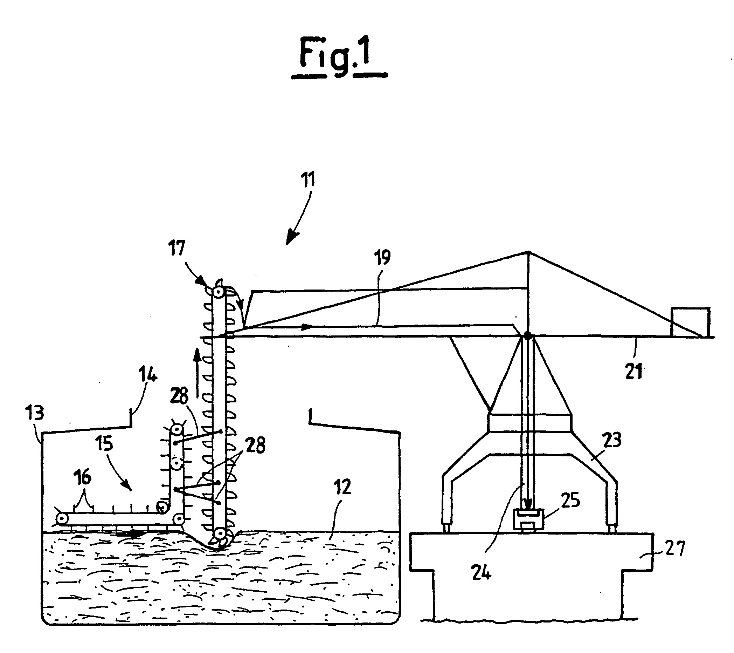

- figure 1 is a raised view of a group for collecting loose material from the hold of a ship according to the present invention,

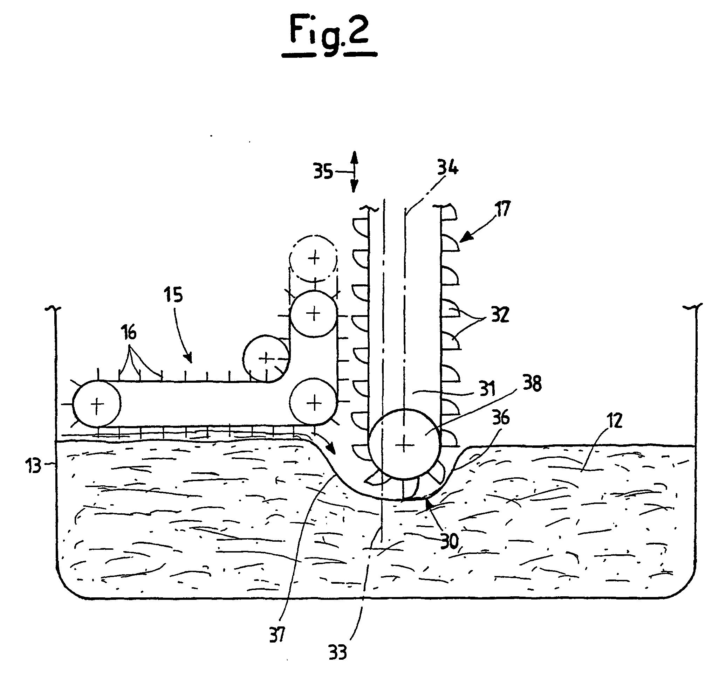

- figure 2 is a view of an enlarged detail of figure 1,
- figure 3 is a perspective view of the moving devices alone which allow the extensibility of the feeder,
- figure 4 is a raised lateral view of the moving devices of figure 3.

With reference to the figures, a group is illustrated, for collecting loose material from the hold of a ship, obtained according to the invention and indicated as a whole by 11, which has the function of moving loose material 12 towards a central zone of the hold 13 of a ship, not shown, where there is an upper central opening 14.

This group 11 essentially comprises a feeder 15, which is extendible and comprises scraping blades 16, and a cup elevator 17 for the loose, or fluid-like material 12. In addition, downstream of the cup elevator 17 there is generally a conveyor 19 for evacuating the material 12.

According to the invention, the group also comprises a moving arm 21 which carries the elevator 17 and moves it, lifting it and lowering it inside the hold 13, when necessary, said moving arm 21 being situated on a cradle 23.

As already specified, the extendible feeder 15 has the function of moving the material 12 towards the central zone of the hold 13 where the cup elevator 17 lifts it and transfers it, outside the hold 13, on the above conveyor 19, consisting, for example, of a belt. An unloading guide, schematized in 24, can help to guide the material 12 from the conveyor 19 towards a collecting zone 25 situated on a wharf 27.

The elevator 17 is fixed by means of pins and rods to the arm 21 and supports the extendible feeder 15, near its lower end, by means of a series of rods 28.

It should be pointed out that the material 12 is transferred from the feeder 15 to the elevator 17 through a "well" 30 dug into the material 12 by a foot 31 of the elevator 17.

The creation of the "well" effect 30 facilitates collection and the complete filling of a series of cups 32 arranged in a closed circuit on the elevator 17 around reels 38, of which only one is shown, and carried by chains 39. This can be explained by the fact that a lower end of the elevator 17 is situated at a lesser height than the lower end of the feeder 15.

The vertical elevator 17 has two distinct movements: a rotation around a vertical axis 33, parallelly offset with respect to one of its axes 34, and a vertical rising/lowering according to the double-pointed arrow 35 inside the hold 13. The feeder 15 with scraping blades 16, joined to the elevator 17, follows these movements.

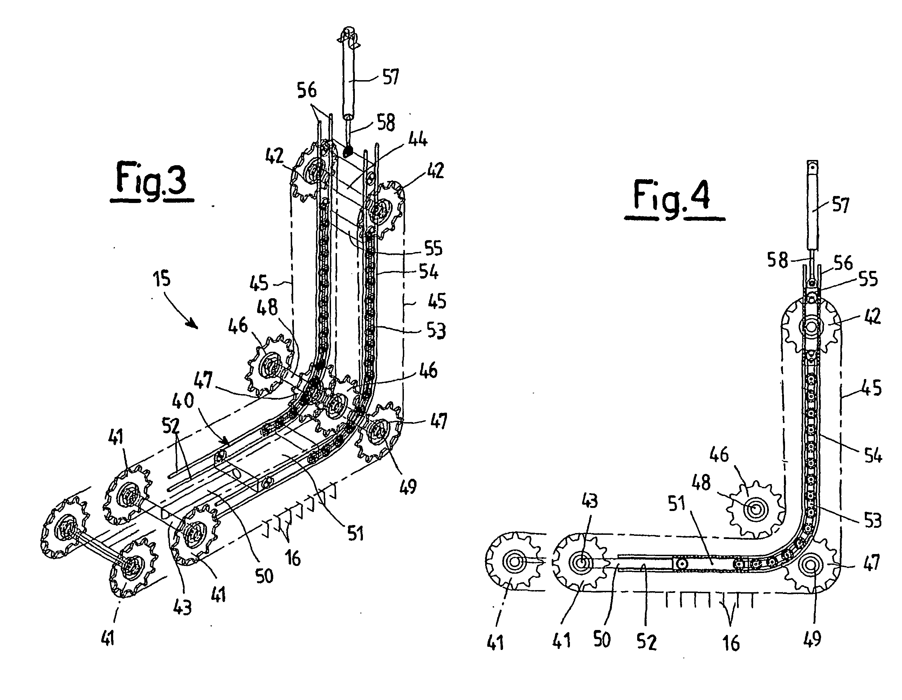

By combining the two movements indicated, a pickup effect of the material 12 is obtained, which takes place on a circular sloping plane, partially schematized as "drill" effect. The extendible feeder 15, during the rotating movement of the whole unit around the vertical axis, can be lengthened or shortened by the specific moving devices 40 which are illustrated in figures 3 and 4. The lengthening and/or shortening is equal to the distance necessary for covering the whole surface of the hold, i.e. to be able to collect both the material in contact with the walls and also the material lying in the corners of the hold.

Figures 3 and 4 show how these moving devices 40 comprise two pairs of cogwheels 41 and 42, situated at the end of two shafts 43 and 44, around which pairs of chains 45 are wound. The chains 45 follow an L-shaped closed-ring track due to the presence of an additional two pairs of cogwheels 46 and 47 situated at the end of shafts 48 and 49 which create the square-shaped variation in direction. It should be noted that whereas the two shafts 48 and 49 are firmly fixed to a structural support of the extendible feeder 15, shafts 43 and 44 are moveable. The first shaft 43 is connected to a rod 50 fixed to a trolley 51 which slides backwards and forwards on horizontal rails 52. A pair of maneuvering ground chains 53, sliding between L-shaped rails 54, is connected at one end to the first trolley 51 and at the other end to a second trolley 55, which also slides backwards and forwards between vertical rails 56. An actuator, such as a cylinder 57 and its piston 58 or an equivalent system, drives the backward and forward movement of the second trolley 55 to which the piston 58 is hinged. It can therefore be seen how these ground chains 53 can operate under compression and cause the movement of the horizontal portion of the extendible feeder 15.

In practice, the moving devices 40 comprise two pairs of chains 45, following an L-shaped closed-ring track and sliding with respect to a structural support by means of at least one actuator 57 to create the lengthening and/or shortening of a horizontal portion and to increase and/or reduce the action of the scraping blades 16 on the loose material 12 contained in the hold 13.

This arrangement allows the rapid extension of the extendible feeder 15.

With each complete circle of the elevator 17, a layer of material is consequently removed having an extension equal to the plan view surface of the hold.

For collecting the last layers of material deposited on the bottom of the hold (cleaning operation), the scraping feeder 15 can be lowered, with respect to the elevator 17, until the operating plane of its blades 16 coincides with the plane tangent to the cups 32 of the elevator 17 in the digging zone.

The circular well 30 which the elevator continuously digs in the material 12, is centered on the vertical rotation axis 33 of the whole group, but is offset with respect to the vertical axis 34 of the elevator 17. This configuration ensures that the elevator 17 always digs near one side 36 of the well 30 whereas, in the area diametrically opposite, a cavity is produced, which acts as a chute 37 for the material carried by the scraping feeder.

This system allows the perfect transferal of the material transported by the scraping blades 16 of the feeder 15 towards the foot 31 of the elevator 17, and also the complete and constant filling of the elevator cups 32.

In addition to the discovery of a "well" 30 dug into the material 12, which is a new and original way for the functioning of the group according to the present invention, the following additional advantages can be listed:
- the extendibility of the arm of the scraping feeder allows material to be collected over the whole surface of the hold, corners included, thus limiting the "dead zones" to the maximum;
- the pick-up surface is more or less rectangular (or square) and consequently conformant with the plan view shapes of ship holds and not, on the contrary, circular, as is the case so far with other machines which do not have the possibility of extending the foot;
- the continuous collection of material also situated in the corners of the hold allows a substantial increase in unloading efficiency.

In this way, the use of an auxiliary mechanical blade can therefore be limited to small final cleaning operations and no longer to the moving of enormous quantities of material.

It should also be observed that the fact of having two components of the group with distinct functions, i.e. a scraper feeder and elevator, enables the respective operating rates to be optimized making the system completely automatic and reliable.

This also makes it possible to avoid problems associated with the previous machines, in which the digging and lifting devices of the material were combined, driven by the same motor, thus making their optimization difficult.

A further advantage which derives from the group of the present invention is that, by operating automatically and by collecting at each passage a layer of material equal to the whole surface of the hold, corners included, the danger is eliminated of the uncontrollable collapsing of non-removed material. This is particularly important as collapsing could cause capacity peaks or, even worse, operating stoppages to manually remove possible blockages of the group.

A constant flow-rate consequently allows an improved and more rational dimensioning of the whole transport line downstream of the group of the invention, with an evident substantial economic advantage.

Furthermore, the elevation group is simplified from an operational and kinematics point of view, due to the fact that the elevator basically has the sole function of lifting the material, with only a bland digging action. The actual cutting and collecting action of the material is, in fact, assigned to the ) scraping blade feeder.

It is therefore possible in a group of the invention to obtain higher lifting rates with a consequent significant reduction, with the same capacity, in both the weight of the material distributed along the height of the elevator, and also the weight of the cups, as well as the cup-carrier chain.

Due to this significant reduction in the load on the lifting device, a second, concretely feasible embodiment can be considered, in which the "cup-carrier chain" can be substituted with an appropriate "belt" having the same function. This would enable a further increase in the lifting rate and would also considerably simplify the pulling mechanisms (such as drums rather than cogwheels).

The feeder 15, which would be fixed to the foot 31 of the elevator 17 by means of fast clutch joints (not shown), could be easily and rapidly substituted with others, kept on the wharf, which are more suitable for the varying hold dimensions and/or for the different quality of the materials to be collected (the latter is already currently in use with buckets).

In the case of breakdown or maintenance of the elevator 17, this could be easily replaced with another, thus reducing stoppages to the minimum, which would otherwise imply high costs incurred by prolonged operating times.

## Claims

1. A group for collecting loose material from the hold of a ship comprising a feeder (15), equipped with scraping blades (16), and an elevator (17) for lifting loose or fluid-like material (12) which is sent from said feeder (15) towards a conveyor (19) for evacuating said material (12), **characterized in that** said feeder (15) is extendible and comprises moving devices (40) which allow its lengthening and/or shortening to cover the whole surface of the hold (13) of a ship, said moving devices (40) comprising two pairs of chains (45), following an L-shaped closed-ring track, and sliding with respect to a structural support by means of at least one actuator (57) in order to create the lengthening and/or shortening of a horizontal portion and to increase and/or reduce the action of said scraping blades (16) on the loose material (12).

2. The group for collecting loose material according to claim 1, **characterized in that** said pairs of chains (45) run on two pairs of cogwheels (41) and (42) , situated at the end of two shafts (43) and (44), said chains (45) being compelled to follow an L-shaped closed-ring track due to the presence of an additional two pairs of cogwheels (46) and (47) situated at the end of shafts (48) and (49) which create the square-shaped variation in direction of the chain (45).

3. The group for collecting loose material according to claim 2, **characterized in that** said two shafts (48, 49) are firmly fixed to said structural support of said extendible feeder (15) and said shafts (43, 44) can be moved, one horizontally and the other vertically.

4. The group for collecting loose material according to claim 2 or 3, **characterized in that** a first shaft (43) is connected to a rod (50) fixed to a trolley (51) which slides backwards and forwards on horizontal rails (52), a pair of maneuvering ground chains (53), sliding between L-shaped rails (54), being connected at one end to the first trolley (51) and at the other end to a second trolley (55), which also slides backwards and forwards between vertical rails (56), said second trolley (55) being connected to the actuator (57).

5. The group for collecting loose material according to claim 4, **characterized in that** said ground chains (53) operate under compression and cause the movement of a horizontal portion of said extendible feeder (15).

6. The group for collecting loose material according to claim 1, **characterized in that** said elevator (17) is fixed to a mobile arm (21) which can be raised and lowered into said hold (13).

7. The group for collecting loose material according to claim 1 or 6, **characterized in that** said elevator (17) is of the cup (32) type.

8. The group for collecting loose material according to claim 1, **characterized in that** a lower end of said elevator (17) is situated at a lesser height than that of said feeder (15), creating a well effect (30) to facilitate the collection of said material excavated by said feeder (15) towards said elevator (17).

## Patentansprüche

1. Gruppe zum Sammeln von losem Material aus dem Laderaum eines Schiffes, umfassend eine mit Kratzschaufeln (16) ausgestattete Zubringereinrichtung (15) und eine Hebevorrichtung (17), um loses oder einer Flüssigkeit ähnliches Material (12), welches von der Zubringereinrichtung (15) in Richtung einer Förderanlage (19) befördert wird, anzuheben, um das Material (12) zu entladen,
**dadurch gekennzeichnet,**
**dass** die Zubringereinrichtung (15) verlängerbar ist und sich bewegende Vorrichtungen (40) umfasst, welche ihr Verlängern und/oder Verkürzen ermöglichen, um die gesamte Oberfläche des Laderaums (13) eines Schiffes abzudecken,
wobei die sich bewegenden Vorrichtungen (40) zwei Paar Ketten (45) umfassen, welche einer L-förmigen ringförmig geschlossenen Führung folgen und bezüglich eines Strukturträgers mittels mindestens einer Betätigungsvorrichtung (57) gleiten, um das Verlängern und/oder das Verkürzen eines horizontalen Abschnitts zu erzeugen und die Tätigkeit der Kratzschaufeln (16) auf dem losen Material (12) zu erweitern und/oder zu verringern.

2. Gruppe zum Sammeln von losem Material nach Anspruch 1, **dadurch gekennzeichnet, dass** Paare von Ketten (45) auf zwei Paaren von Zahnrädern (41) und (42) laufen, welche an dem Ende von zwei Wellen (43) und (44) angeordnet sind, wobei die Ketten (45) gezwungen werden, einer L-förmigen ringförmig geschlossenen Führung auf Grund des Vorhandenseins von zwei zusätzlichen Paaren von Zahnrädern (46) und (47) zu folgen, welche an dem Ende von Wellen (48) und (49) angeordnet sind, was die rechteckförmige Veränderung in Richtung der Kette (45) erzeugt.

3. Gruppe zum Sammeln von losem Material nach Anspruch 2, **dadurch gekennzeichnet, dass** die zwei Wellen (48, 49) fest an dem Strukturträger der verlängerbaren Zubringereinrichtung (15) befestigt sind und die Wellen (43, 44) bewegt werden können, eine horizontal und die andere vertikal.

4. Gruppe zum Sammeln von losem Material nach Anspruch 2 oder 3, **dadurch gekennzeichnet, dass** eine erste Welle (43) mit einer Stange (50) verbunden ist, welche an einem Wagen (51) befestigt ist, welcher auf horizontalen Schienen (52) vorwärts und rückwärts gleitet, wobei ein Paar manövrierende Grundketten (53), welche zwischen L-förmigen Schienen (54) gleiten, an einem Ende mit dem ersten Wagen (51) und an dem anderen Ende mit einem zweiten Wagen (55) verbunden sind, welcher auch zwischen vertikalen Schienen (56) rückwärts und vorwärts gleitet, wobei der zweite Wagen (55) mit der Betätigungsvorrichtung (57) verbunden ist.

5. Gruppe zum Sammeln von losem Material nach Anspruch 4, **dadurch gekennzeichnet, dass** die Grundketten (53) unter Kompression arbeiten und die Bewegung eines horizontalen Abschnitts der verlängerbaren Zubringereinrichtung (15) verursachen.

6. Gruppe zum Sammeln von losem Material nach Anspruch 1, **dadurch gekennzeichnet, dass** die Hebevorrichtung (17) an einem beweglichen Arm (21) befestigt ist, welcher angehoben und in den Laderaum (13) abgesenkt werden kann.

7. Gruppe zum Sammeln von losem Material nach Anspruch 1 oder 6, **dadurch gekennzeichnet, dass** die Hebevorrichtung (17) von dem Schalen (32)-Typ ist.

8. Gruppe zum Sammeln von losem Material nach Anspruch 1, **dadurch gekennzeichnet, dass** ein unteres Ende der Hebevorrichtung (17) niedriger angeordnet ist als die Zubringereinrichtung (15), wobei ein Wanneneffekt (30) erzeugt wird, um das Sammeln des Materials zu ermöglichen, welches durch die Zubringereinrichtung (15) zu der Hebevorrichtung (17) hin freigelegt ist.

## Revendications

1. Groupe pour collecter des matières en vrac d'une cale d'un navire comprenant un dispositif d'alimentation (15) équipé de racles traînantes (16) et un élévateur (17) destiné à soulever la matière en vrac ou liquide (12) qui est envoyée depuis ledit dispositif d'alimentation (15) vers un convoyeur (19) destiné à évacuer ladite matière (12), **caractérisé en ce que** ledit dispositif d'alimentation (15) est extensible et comprend des dispositifs mobiles (40) qui permettent son allongement et/ou son rétrécissement pour couvrir la totalité de la surface de la cale (13) d'un navire, lesdits dispositifs mobiles (40) comprenant deux paires de chaînes (45) suivant un rail à anneau fermé en forme de L et coulissant par rapport à un support structurel au moyen d'au moins un actionneur (57) afin de créer l'allongement et/ou le rétrécissement d'une partie horizontale et d'augmenter et/ou de réduire l'action desdites racles traînantes (16) sur la matière en vrac (12).

2. Groupe pour collecter des matières en vrac selon la revendication 1, **caractérisé en ce que** lesdites paires de chaîne (45) courent sur deux paires de roues dentées (41) et (42) situées au niveau de l'extrémité de deux arbres (43) et (44), lesdites chaînes (45) étant forcées de suivre un rail à anneau fermé en forme de L en raison de la présence de deux paires supplémentaires de roues dentées (46) et (47) situées au niveau de l'extrémité des arbres (48) et (49) qui créent le variation de forme carrée dans la direction de la chaîne (45).

3. Groupe pour collecter des matières en vrac selon la revendication 2, **caractérisé en ce que** lesdits deux arbres (48, 49) sont fermement fixés audit support structurel dudit dispositif d'alimentation extensible (15) et lesdits arbres (43, 44) peuvent être déplacés, l'un horizontalement et l'autre verticalement.

4. Groupe pour collecter des matières en vrac selon la revendication 2 ou 3, **caractérisé en ce qu'**un premier arbre (43) est relié à une tige (50) fixée à un chariot (51) qui coulisse vers l'arrière et vers l'avant sur des rails horizontaux (52), une paire de chaînes de manoeuvre au sol (53) coulissant entre les rails en forme de L (54) étant reliées au niveau d'une extrémité au premier chariot (51) et au niveau de l'autre extrémité à un second chariot (55) qui coulisse également vers l'arrière et vers l'avant entre des rails verticaux (56), ledit second chariot (55) étant relié à l'actionneur (57).

5. Groupe pour collecter des matières en vrac selon la revendication 4, **caractérisé en ce que** lesdites chaînes au sol (53) fonctionnent sous la compression et provoquent le mouvement d'une partie horizontale dudit dispositif d'alimentation extensible (15).

6. Groupe pour collecter des matières en vrac selon la revendication 1, **caractérisé en ce que** ledit élévateur (17) est fixé à un bras mobile (21) qui peut être soulevé et abaissé à l'intérieur de ladite cale (13).

7. Groupe pour collecter des matières en vrac selon la revendication 1 ou 6, **caractérisé en ce que** ledit élévateur (17) est du type à godets (32).

8. Groupe pour collecter des matières en vrac selon la revendication 1, **caractérisé en ce qu'**une extrémité inférieure dudit élévateur (17) est située à une hauteur inférieure à celle dudit dispositif d'alimentation (15), créant un effet de puits (30) pour faciliter la collecte d'alimentation (15) vers ledit élévateur (17).
